Europäisches Patentamt

European Patent Office

Office européen des brevets

(19)

(11) Veröffentlichungsnummer: **0 224 692**
**B1**

(12) **EUROPÄISCHE PATENTSCHRIFT**

(45) Veröffentlichungstag der Patentschrift:
16.08.90

(51) Int. Cl.⁵: **G01N 1/10, G01N 1/20**

(21) Anmeldenummer: 86114292.5

(22) Anmeldetag: 16.10.86

(54) **Vorrichtung zur emissionsfreien Probenahme von leicht verdampfbaren Flüssigkeiten.**

(30) Priorität: 25.10.85 DE 3537940

(43) Veröffentlichungstag der Anmeldung:
10.06.87 Patentblatt 87/24

(45) Bekanntmachung des Hinweises auf die Patenterteilung:
16.08.90 Patentblatt 90/33

(84) Benannte Vertragsstaaten:
AT BE CH DE FR GB IT LI NL SE

(56) Entgegenhaltungen:
CH-A- 489 794
DE-A- 2 206 004

(73) Patentinhaber: EC ERDÖLCHEMIE GMBH,
Postfach 75 20 02, D-5000 Köln 71(DE)

(72) Erfinder: Herwig, Jens, Dr., Nerzweg 2,
D-5000 Köln 40(DE)
Erfinder: Nörenberg, Hagen, Dr.,
Robert-Koch-Strasse 33, D-4047 Dormagen(DE)
Erfinder: Bergmann, Friedhelm, Dipl.-Ing., Besslen
Käulchen 5, D-5000 Köln 71(DE)
Erfinder: Stiller, Manfred, Dipl.-Ing., Röntgenstrasse 17,
D-4047 Dormagen(DE)
Erfinder: Schlemmermeyer, Horst, Krebelspfad 17,
D-5000 Köln 71(DE)
Erfinder: Schmidt, Wilfried, Liedbergweg 31,
D-5000 Köln 80(DE)
Erfinder: Straube, Hilmar, Herriger Weg 23,
D-5024 Pulheim 4(DE)
Erfinder: Wolter, Helmut, Grieskuhlenweg 13,
D-5000 Köln 71(DE)

(74) Vertreter: Schumacher, Günter, Dr. et al, c/o Bayer AG
Konzernverwaltung RP Patentabteilung,
D-5090 Leverkusen 1 Bayerwerk(DE)

## Beschreibung

Die vorliegende Erfindung betrifft eine Vorrichtung zur Probenahme von leicht verdampfbaren Flüssigkeiten, ohne daß während der Probenahme Emissionen der zu untersuchenden leicht verdampfbaren Flüssigkeit auftreten. Die Vorrichtung hat hierzu neben der Einrichtung zur eigentlichen Probenahme zusätzliche Einrichtungen zur Spülung der erfindungsgemäßen Probenahmevorrichtung mit einem inerten Spülmittel; das benutzte Spülmittel und Reste der zu untersuchenden leicht verdampfbaren Flüssigkeit werden in ein Entsorgungssystem gegeben.

Aus Gründen der Arbeitshygiene und des Umweltschutzes sowie der Sicherheit, insbesondere in chemischen oder petrochemischen Anlagen, ist es erforderlich, die Probenahme von zu untersuchenden leicht verdampfbaren Flüssigkeiten emissionsfrei durchzuführen. An eine Vorrichtung zur emissionsfreien Probenahme werden unter anderem die folgenden Forderungen gerichtet:

1. die Probe soll für die an der Probenahmestelle vorliegende leicht verdampfbare Flüssigkeit repräsentativ sein. Das bedeutet im allgemeinen, daß die Probe, die einem Behälter, einer Rohrleitung oder einem Anlageteil entnommen werden soll, eine angemessene Zeit, beispielsweise einige Minuten, fließt, bevor die gewünschte Probe entnommen wird, um zu verhindern, daß in sogenannten "toten Ecken" oder Rohrenden stehengebliebene Flüssigkeit, die sich möglicherweise verändert hat, in den Probebehälter abgefüllt wird.

2. Emissionen am Ort der Probenahme sollen vermieden werden. Damit soll es möglich werden, beim Umfang mit arbeitshygienisch bedenklichen Stoffen schweres Schutzgerät, wie schweren Atemschutz, zu vermeiden. Weiterhin soll eine Kontamination der entnommenen Probe vermieden werden. Beide Punkte bedingen eine Spülung der Probenahmevorrichtung, wobei das Spülmedium in geeigneter Weise entsorgt werden muß.

3. Bedienungsfehler mit unerwünschten Folgen sollen weitgehend ausgeschlossen werden.

4. Die Installation und Handhabung der Probenahmevorrichtung soll mit vertretbarem Aufwand möglich sein.

5. Die Probenahmeflasche soll stets den gleichen gewünschten Füllungsgrad aufweisen; insbesondere soll die Probenahmeflasche ein Gaspolster oberhalb der zu prüfenden leicht verdampfbaren Flüssigkeit aufweisen, um ein Bersten der Probenahmeflasche bei Temperaturschwankungen zu vermeiden.

Aus DE-OS 2 206 004 ist bereits eine Vorrichtung zum Zuführen verschiedener Proben zu einem Analysiergerät bekannt, bei dem die Probezufuhrleitungen mit einem Spülfluid gespült werden, um folgende Proben nicht durch die vorangegangenen zu verunreinigen. Hierzu werden aufwendige 6-Wege-Ventile benötigt. Diese DE-OS gibt dem Fachmann keinerlei Hinweise zu einer emissionsfreien Probenahme, die bei aggressiven Flüssigkeiten aus arbeitshygienischen und ökologischen Gründen erforderlich ist; weiterhin gibt sie keine Hinweise zur Entnahme stets gleich großer und damit vergleichbarer Proben.

Die genannten Anforderungen werden erfüllt von der erfindungsgemäßen Vorrichtung zur emissionsfreien Probenahme von leicht verdampfbaren Flüssigkeiten mit den Merkmalen nach Anspruch 1.

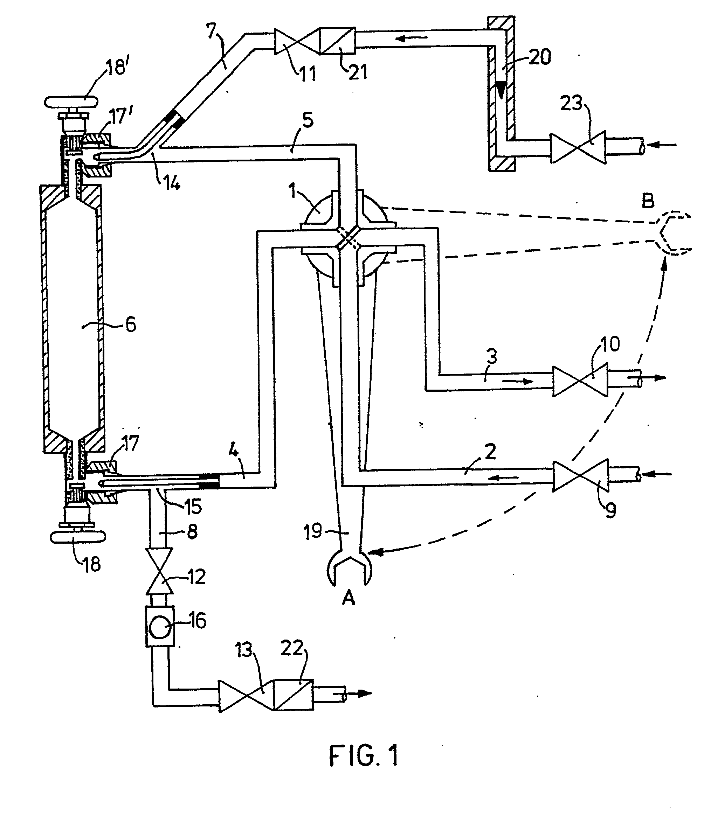

Anhand der beigefügten Abbildung seien der Aufbau und die Funktionsweise der erfindungsgemäßen Vorrichtung wie folgt erläutert:

Auf einem geeigneten Montagerahmen ist ein 4-Wege-Hahn (1) installiert, der an zwei seiner Abgänge mit einer Vorlauf-(2) und Rücklaufleitung (3) mit dem das Prüfmedium enthaltenden Behälter verbunden ist. Dieser Behälter kann ein Lagerbehälter, eine Rohrleitung oder ein anderes beliebiges Anlageteil sein; Vorlauf-(2) und Rücklaufleitung (3) können beispielsweise die Druck- bzw. Saugseite einer Pumpe oder ein Bypass einer Rohrleitung sein. Die Leitungen (2) und (3) sind so mit dem Hahn (1) verbunden, daß in der Stellung A des Hahns die Leitungen (2) und (3) auf Durchgang geschaltet sind. Von dem Hahn (1) führt eine Leitung (4) zu der an die erfindungsgemäße Vorrichtung anschließbaren Probeflasche (6). Von der Probeflasche (6) führt eine weitere Leitung (5) zu dem Hahn (1) zurück. Auch die Leitungen (4) und (5) sind in der Stellung A von dem Hahn (1) auf Durchgang geschaltet.

Die Probeflasche (6) wird an die Enden von den Leitungen (4) und (5) in einer geeigneten Weise angeschlossen, beispielsweise durch Anstecken, durch sogenannten Bajonettverschluß oder durch Anschrauben, beispielsweise mit Überwurfmuttern. Das Anschrauben mit Überwurfmuttern ist eine bevorzugte Form des Anschlusses von der Probeflasche (6), in der Abbildung dargestellt durch zwei Überwurfmuttern (17) und (17'). Die Probenahmeflasche (6) ist in bekannter Weise zu verschließen, beispielsweise durch Schraubventile (18) und (18').

Die Leitungen (4) und (5) sind in der Nähe des Anschlusses (17) und (17') mit einer Verzweigung (14) und (15) ausgerüstet. Diese Verzweigung kann beispielsweise als T- oder als Y-Stück ausgeführt sein. Bei der Verzweigung (14) führt die Zuleitung (7) für ein inertes Spülmittel in die Leitung (5). Bei der Verzweigung (15) entspringt eine Ableitung (8) für das inerte Spülmittel aus der Leitung (4); die Ableitung (8) führt zu einem Entsorgungssystem, in welchem eine geeignete Reinigung von Resten der mit dem inerten Spülmittel fortgetragenen leicht verdampfbaren Flüssigkeit erfolgt. Solche Reinigung kann beispielsweise durch einen Wäscher, durch eine Fackel oder durch eine andere Verbrennung durchgeführt werden. Auch die Rückführung an eine geeignete Stelle im Verfahren kommt als eine anzustrebende Entsorgungsmöglichkeit in Betracht.

Innerhalb der erfindungsgemäßen Vorrichtung kann die Probeflasche (6) grundsätzlich in waagerechter Position oder in einer von der waagerechten abweichenden Position angebracht werden. In einer bevorzugten Ausführung weicht die Position der Probeflasche (6) von der waagerechten ab, so daß beispielsweise der Anschluß (17') und das Ventil (18') höher zu liegen kommen als der Anschluß (17) und das Ventil (18). Gleichzeitig kommen damit auch die Leitungen (5) und (7) räumlich höher zu liegen als die Leitungen (4) und (8). In besonders bevorzugter Weise wird die erfindungsgemäße Vorrichtung so ausgestaltet, daß die Probeflasche in senkrechter Position angeschlossen wird.

In einer weiteren bevorzugten Ausführung, die auch in der beigefügten Abbildung gezeigt ist, wird die Zuleitung (7) vor dem Eintritt (14) bis unmittelbar an den Ventilsitz des Ventils (18') als koaxiales Doppelrohr geführt. Damit wird gewährleistet, daß beim Spülvorgang keine Reste der entnommenen leicht verdampfbaren Flüssigkeit etwa in der "toten Ecke" im Bereich von (17') und (18') verbleiben. In analoger Weise ist auch die Anbindung der Leitung (8) an die Leitung (4) bei der Verzweigung (15) bis hin zum Ventilsitz des Ventils (18) als koaxiales Doppelrohr geführt. Selbstverständlich muß zur dargestellten Wirkungsweise das beschriebene Doppelrohr nicht streng koaxial sein. Desweiteren ist es gleichgültig ob die einmündende Leitung (7) oder die Leitung (5) das innere Rohr des genannten Doppelrohres bilden. Auch bei der Ableitung des inerten Spülmittels (15) ist es grundsätzlich gleich, ob die Leitung (4) oder die Leitung (8) das innere Rohr des Doppelrohres bilden. In bevorzugter Weise wird die in der Abbildung dargestellte Ausführung gewählt, bei der bei der Verzweigung (14) die Leitung (7) als das innere Rohr und bei der Verzweigung (15) die Leitung (4) als das innere Rohr ausgebildet werden.

Bei der erfindungsgemäßen Vorrichtung ist die Ableitung (8) für das inerte Spülmittel mit einer Doppelabsperrung durch die Hähne oder Ventile (12) und (13) ausgerüstet. Zwischen (12) und (13) kann sich ein Schauglas (16) befinden. Das Volumen in der Leitung (8) zwischen den Ventilen (12) und (13) ist identisch mit dem reproduzierbar angestrebten Gasvolumen über dem Flüssigkeitsniveau. Das angestrebte Flüssigkeitsfüllvolumen der Probeflasche (6) beträgt beispielsweise 60-95 % des Gesamtvolumens der Probeflasche (6). Mit Hilfe dieser Ausführung der erfindungsgemäßen Vorrichtung ist es sodann möglich, daß bei der Hebelstellung A des Hahns (1) und bei durch den Hahn oder das Ventil (11) geschlossener Leitung (7) sowie bei beiderseits bei den Ventilen (18) und (18') geöffneter Probeflasche (6) das zwischen den Ventilen (12) und (13) eingesperrte inerte Spülgas nach Öffnen des Ventils (12) einen solchen Teil der als Probe genommenen Flüssigkeit aus der Probeflasche (6) und der Leitung (5) verdrängt, daß das gewünschte Füllvolumen in der Probeflasche (6) erreicht wird. Das verdrängte Probemedium fließt seinerseits in den Bereich zwischen den Ventilen (12) und (13). Die Stellung A des Hahns (1) ist dadurch gekennzeichnet, daß die zur Probenahme vorgesehene leicht verdampfbare Flüssigkeit über Vor- (2) und Rücklauf (3) im Kreis geführt werden kann (kleiner Kreislauf). Die Stellung von B des Hahns (1) ist dadurch gekennzeichnet, daß die zur Probenahme vorgesehene leicht verdampfbare Flüssigkeit über die Leitungen (2) und (4), die Probeflasche (6) sowie die Leitungen (5) und (3) im Kreis geführt werden kann (großer Kreislauf).

In einer bevorzugten Ausführungsform ist der Bedienungshebel (19) des Hahns (1) als Schraubenschlüssel in einer zur Verschraubung der Anschlüsse (17) und (17') geeigneten Größe ausgeführt. In einer besonders bevorzugten Ausführungsform ist der Hebel (19) so arretiert, daß sein Abnehmen und damit das Lösen der Verschraubungen (17) und (17') nur in der Stellung A möglich ist.

Die erfindungsgemäße Vorrichtung eignet sich grundsätzlich für alle Flüssigkeiten, die durch ein inertes gasförmiges Spülmedium verdrängt und verdampft werden können. Dies können neben bei Normaldruck flüssigen Stoffen bzw. deren Gemischen auch unter Druck stehende verflüssigte Gase sein. Die erfindungsgemäße Vorrichtung kann hierzu in einer dem Fachmann geläufigen Weise druckfest ausgeführt werden.

In besonderer Weise eignet sich die erfindungsgemäße Vorrichtung für aggressive, leicht verdampfbare Flüssigkeiten, die giftig sind, ätzend wirken oder in anderer Weise umweltgefährlich sind. Falls es hierzu erforderlich ist, kann die erfindungsgemäße Vorrichtung korrosionsfest ausgeführt sein. Korrosionsfeste Materialien sind beispielsweise korrosionsfeste Metalle, wie Edelstähle, halbedle oder edle Metalle, korrosionsfeste andere anorganische Materialien, wie Glas oder Keramik, oder korrosionsfeste organische Materialien, wie Polyethylen oder Polypropylen. Die Anwendung solcher korrosionsfester Materialien bei verschiedenen korrosiven Medien ist dem Fachmann geläufig.

Beispiele für leicht verdampfbare Flüssigkeiten sind: anorganische Stoffe, wie $HF$, $HCl$, $HBr$, $NH_3$, $HNO_3$ und andere; organische Stoffe wie Kohlenwasserstoffe mit Siedepunkten bis zu etwa 150°C, beispielsweise gesättigte oder ungesättigte aliphatische oder aromatische Kohlenwasserstoffe und ihre Gemische, Kraftstoffe oder Kraftstoffkomponenten; Halogenkohlenwasserstoffe mit einem Siedepunkt bis etwa 150°C, wie Methylenchlorid, Chloroform, Tetrachlorkohlenstoff, 1,1,1-Trichlorethylen und andere; Säuren, wie Ameisensäure, Essigsäure oder Blausäure; verschiedene Ether, Ester, Ketone oder Alkohole; Epoxide, wie Ethylenoxide; schließlich andere, insbesondere toxische und schwierig zu handhabende Heteroverbindungen, wie Methylisocyanat, Phosgen, Thionylchlorid und ähnliche.

Als inertes gasförmiges Spülmedium eignet sich beispielsweise Stickstoff, Argon sowie deren Gemische und weiterhin, falls keine Reaktion mit dem Probemedium zu befürchten ist auch Kohlendioxid, Methan oder andere. In bevorzugter Weise wird der leicht zur Verfügung stehende Stickstoff eingesetzt.

Grundsätzlich ist die erfindungsgemäße Vorrichtung jedoch auch zur Probenahme bei schwerer verdampfbaren, insbesondere toxischen Stoffen einsetzbar. Beim Spülvorgang würde hierbei zunächst mit einem niedrig siedenden, leicht verdampfbaren Primärspülmittel der schwerer verdampfbare Stoff verdrängt und anschließend das Primärspülmittel mit einem der oben beschriebenen inerten gasförmigen Spülmittel aus der Vorrichtung verdrängt.

Geeignete Primärspülmittel können beispielsweise Tetrahydrofuran, Aceton, Methanol und andere sein, die so eingesetzt werden, daß keine chemische Reaktion zwischen der schwerer verdampfbaren Flüssigkeit und dem Primärspülmittel eintritt.

Die Rohrleitungen der erfindungsgemäßen Vorrichtung sind mit geeigneten und dem Fachmann bekannten Absperrorganen (9), (10), (11), (12), (13) und (23), wie Hähnen oder Ventilen versehen. Die Leitung (7) kann gegebenenfalls eine Meßeinrichtung, beispielsweise ein Rotameter (20) für das inerte Spülmittel enthalten. Die Leitungen (7) und (8) können darüber hinaus mit Sicherheitseinrichtungen, wie mit Rückschlagklappen (21) und (22), ausgerüstet sein.

Die emissionsfreie und sichere Probenahme mit Hilfe der erfindungsgemäßen Vorrichtung sei unter Bezug auf die beigefügte Abbildung in folgenden Einzelschritten dargestellt:

a) die Absperrungen (11), (12) und (13) sind geschlossen, der Bedienungshebel (19) hält den 4-Wege-Hahn (1) in Stellung A. Soweit noch keine Probeflasche (6) angeschlossen ist, wird der Hebel (19) abgenommen und eine neue Probeflasche (6) bei (17) und (17') angeschraubt. Der Hebel (19) wird wieder auf den Hahn (1) gesteckt.

b) Zur Spülung der Probeflasche (6) und der gesamten Vorrichtung werden die Ventile (11), (12) und (13) geöffnet und über Rotameter (20) eine geeignete Menge an inertem Spülmedium eingestellt. Hierzu wird eine geeignete Zeit, beispielsweise 3 Minuten angesetzt. Das Spülmittel entweicht über das Ventil (13) und Rückschlagklappe (22) zum Entsorgungssystem. Während des Spülvorganges werden gegebenenfalls die Ventile (18) und (18') der Probeflasche (6) geschlossen, um auch die Leitung (5), den Hahn (1) und die Leitung (4) zu spülen.

c) Zum Anfahren des Produktweges (kleiner Kreislauf) werden die Ventile (9) und (10) geöffnet und, falls erforderlich, eine Pumpe des betreffenden Anlageteils, aus dem die Probe entnommen werden soll, eingeschaltet. Die Flüssigkeit, von der eine Probe entnommen werden soll wird für eine angemessene Zeit, beispielsweise ebenfalls 3 Minuten, über diesen kleinen Kreislauf (Stellung A) gefahren. Falls nicht bereits unter a) geschehen, wird spätestens jetzt der Bedienungshebel (19) wieder aufgesetzt.

d) Zur Beendigung der Spülung mit dem inerten Spülmittel werden die Ventile (11), (12) und (13) geschlossen.

e) Zur Füllung der Probeflasche (6) mit der zu entnehmenden Probe wird der Hahn (1) mit Hilfe des Hebels (19) auf Stellung B gestellt und der große Kreislauf für eine ausreichende Zeit, beispielsweise wiederum 3 Minuten, gefahren.

f) Zur Sicherstellung des angestrebten Füllgrades der Probeflasche (6) wird der Hahn (1) wieder auf Stellung A gestellt, die Absperrung (12) geöffnet und ausreichende Zeit abgewartet (beispielsweise wiederum 3 Minuten). Dabei gerät das inerte Spülmedium, das bisher zwischen den Ventilen (12) und (13) eingesperrt war, in die Leitung (5) und in den oberen Teil der Probeflasche (6).

Hierbei sinkt das Niveau der entnommenen Probe in der Probeflasche (6) auf die angestrebte Marke. Wie bereits oben ausgeführt, ist hierbei im allgemeinen keine Meßgenauigkeit erforderlich, da ein Gaspolster im oberen Teil der Probeflasche (6) hauptsächlich als Sicherheitsmaßnahme dient, damit bei Temperaturschwankungen ein Bersten der Probeflasche (6) vermieden wird. Es sollte gewährleistet sein, daß ein vorgeschriebenes Sicherheitsgaspolster nicht unterschritten wird.

g) Zur Entleerung und Spülung der erfindungsgemäßen Probenahmevorrichtung werden zunächst die Ventile (9) und (10) geschlossen und gegebenenfalls die Produktpumpe abgestellt. Weiterhin werden die Probeflaschenventile (18) und (18') geschlossen. Danach werden die Ventile (11) und (13) geöffnet, über den Rotameter (20) eine ausreichende Menge an Spülmedium eingestellt und während einer ausreichenden Zeit (beispielsweise wiederum 3 Minuten) die Leitungen (5), (4) und (8) sowie der dazwischenliegende Bereich des Hahns (1) gespült.

Falls das Spülen bei erhöhten Inertgasdruck erfolgt und das Probenahmesystem vor dem Abschrauben der Probenahmeflasche noch unter einem erhöhtem Druck steht, empfiehlt sich die Installation eines zusätzlichen Ventils im Bereich der Leitungen (4) und (5), um eine gezielte Entspannung zu gewährleisten.

h) Zum Abnehmen der Probeflasche (6) werden die Ventile (11), (12) und (13) geschlossen, der Hebel (19) abgenommen und die Verschraubungen (17) und (17') gelöst.

i) Zur Sicherung des Probenahmesystems wird im allgemeinen bereits jetzt die nächste Probeflasche angeschlossen.

**Patentansprüche**

1. Vorrichtung zur emissionsfreien Probenahme von leicht verdampfbaren Flüssigkeiten bestehend aus einem Mehrwegehahn, einer Probenahmeflasche und Zuleitungen für ein inertes Spülmittel, dadurch gekennzeichnet,
daß sie aus einem 4-Wege-Hahn (1) besteht, von dem zwei im 4-Wege-Hahn (1) auf Durchgang schaltbare Leitungen (2, 3) von und zu dem die zu prüfende Flüssigkeit enthaltenden Behälter führen und von dem die beiden anderen, ebenfalls im 4-Wege-Hahn (1) auf Durchgang schaltbare Leitungen (4, 5) zu einer verschließbaren und an die Vorrichtung anschließbaren Probeflasche (6) führen,
daß sie weiter aus einer Zuleitung (7) für ein inertes Spülmittel, die in die von der Probeflasche kommende Leitung (5) in der Nähe der Probeflasche (6) einmündet, und einer Ableitung (8) für das inerte Spülmittel, die aus der zur Probeflasche führenden Leitung (4) in der Nähe der Probeflasche (6) entspringt und zu einem Entsorgungssystem führt, besteht und
daß die Ableitung (8) für das inerte Spülmittel mit zwei eine Doppelabsperrung bildenden Ventilen (12, 13) ausgerüstet ist und gegebenenfalls zwischen den Ventilen (12, 13) ein Schauglas (16) angeordnet ist,
wobei das Volumen der Doppelabsperrung zwischen den Ventilen (12, 13) so bemessen ist, daß bei einer Stellung (A) des 4-Wege-Hahnes (1) so, daß die vom 4-Wege-Hahn (1) zur Probeflasche (6) führenden Leitungen (4, 5) auf Durchgang geschaltet sind, sich nach Öffnen des zur Probeflasche (6) zeigenden Ventils (12) der Doppelabsperrung eine vorbestimmte Füllung der Probeflasche (6) dadurch einstellt, daß das zwischen den Ventilen (12, 13) eingesperrte Spülmittel einen Teil der zu prüfenden Flüssigkeit in der Probeflasche (6) verdrängt.

2. Vorrichtung nach Anspruch 1, dadurch gekennzeichnet, daß die Längsachse der Probeflasche (6) eine von der Waagerechten abweichende Position einnimmt und die zur Probeflasche (6) führende Leitung (5) sowie die Zuleitung (7) des inerten Spülmittels räumlich höher liegen als die von der Probeflasche kommende Leitung (4) und die Ableitung (8) für das inerte Spülmittel.

3. Vorrichtung nach Anspruch 2, dadurch gekennzeichnet, daß die Längsachse der Probeflasche (6) eine senkrechte Position einnimmt.

4. Vorrichtung nach Anspruch 1 bis 3, dadurch gekennzeichnet, daß die als T- oder Y-Stück (14, 15) ausgeführte Zu- bzw. Ableitung für das inerte Spülmittel bis zur Anschlußstelle der Probeflasche als koaxiales Doppelrohr ausgeführt ist.

5. Vorrichtung nach Anspruch 1, dadurch gekennzeichnet, daß die vorbestimmte Füllung der Probeflasche (6) 60–95% des Gesamtvolumens der Probeflasche (6) ist.

6. Vorrichtung nach Anspruch 1 bis 5, dadurch gekennzeichnet, daß die Probeflasche (6) durch Verschraubung anschließbar ist und der 4-Wege-Hahn (1) einen abnehmbaren Bedienungshebel (19) aufweist, der als Schraubenschlüssel mit für den Anschluß der Probeflasche passender Nennweite ausgeführt ist.

7. Vorrichtung nach Anspruch 6, dadurch gekennzeichnet, daß der als Schraubenschlüssel ausgebildete Bedienungshebel (19) des 4-Wege-Hahns (1) nur abgenommen werden kann, wenn der 4-Wege-Hahn (1) in einer Stellung (A) steht, die eine direkte Verbindung des die zu prüfende Flüssigkeit enthaltenden Behälters mit der Probeflasche (6) ausschließt.

## Claims

1. Device for emission-free sampling of volatile liquids, comprising a multi-way tap, a sampling bottle and supply lines for an inert flushing medium, characterized in that it comprises a 4-way tap (1), from which two lines (2, 3), which can be connected together via the 4-way tap (1), lead from and to the container holding the liquid to be tested, and from which the two other lines (4, 5), which can also be connected together via the 4-way tap (1), lead to a sample bottle (6) which can be sealed and which can be connected to the device, in that it further comprises a supply line (7) for an inert flushing medium, which joins the line (5) coming from the sample bottle in the region of the sample bottle (6), and a discharge line (8) for the inert flushing medium, which leaves the line (4) leading to the sample bottle in the region of the sample bottle (6) and leads to a disposal system, and in that the discharge line (8) for the inert flushing medium is fitted with two valves (12, 13), which form a double isolation, and if appropriate an inspection glass (16) is located between the valves (12, 13), the volume of the double isolation between the valves (12, 13) being dimensioned in such a manner that, when the 4-way tap (1) is set (A) so that the lines (4, 5) leading from the 4-way tap (1) to the sample bottle (6) are connected together and the valve (12), which faces the sample bottle (6), of the double isolation is opened, a predetermined filling of the sample bottle (6) is brought about by the flushing medium retained between the valves (12, 13) forcing part of the liquid to be tested into the sample bottle (6).

2. Device according to Claim 1, characterized in that the longitudinal axis of the sample bottle (6) assumes a position which deviates from the horizontal and the line (5) leading to the sample bottle (6) and the supply line (7) for the inert flushing medium lie spatially higher than the line (4) coming from the sample bottle and than the discharge line (8) for the inert flushing medium.

3. Device according to Claim 2, characterized in that the longitudinal axis of the sample bottle (6) assumes a vertical position.

4. Device according to Claims 1 to 3, characterized in that the supply or discharge line for the inert flushing medium, constructed as a T or Y piece (14, 15), is constructed as a coaxial double pipe up to the connection point to the sample bottle.

5. Device according to Claim 1, characterized in that the predetermined filling of the sample bottle (6) is 60-95% of the total volume of the sample bottle (6).

6. Device according to Claims 1 to 5, characterized in that the sample bottle (6) can be connected by means of a screw joint and the 4-way tap (1) has a removable operating lever (19) which is constructed as a spanner with nominal width suitable for the sample bottle connection.

7. Device according to Claim 6, characterized in that the operating lever (19), constructed as a spanner, for the 4-way tap (1) can only be removed when the 4-way tap (1) is in a position (A) which excludes direct connection of the container holding the liquid to be tested to the sample bottle (6).

## Revendications

1. Dispositif pour le prélèvement d'échantillons (sans émissions) de liquides aisément vaporisables, ce dispositif comprenant un robinet à plusieurs voies, un flacon de prélèvement d'échantillons et des conduites d'alimentation pour un agent de rinçage inerte, caractérisé
en ce qu'il comprend un robinet à 4 voies (1) duquel deux canalisations (2, 3) pouvant être mises en circuit dans le robinet à 4 voies (1), duquel et auquel conduisent les récipients contenant le liquide à éprouver et duquel également les deux autres canalisations (4, 5) pouvant être également mises en circuit dans le robinet à 4 voies (1) conduisent à un flacon à échantillons (6) pouvant être fermé et pouvant être raccordé au dispositif,

en ce qu'il comprend, en outre, une conduite d'alimentation (7) pour un agent de rinçage inerte qui débouche dans la canalisation (5) provenant du flacon à échantillons (6), à proximité de ce dernier, ainsi qu'une conduite d'évacuation (8) pour l'agent de rinçage inerte sortant de la canalisation (4) allant au flacon à échantillons (6) à proximité de ce dernier, pour parvenir ensuite à un système d'élimination des déchets, et

en ce que la conduite d'évacuation (8) pour l'agent de rinçage inerte est pourvue de deux soupapes (12, 13) formant un blocage double tandis que, entre les soupapes (12, 13), est éventuellement disposé un voyant (16),

le volume du blocage double entre les soupapes (12, 13) étant calculé de telle sorte que, dans une position (A) du robinet à 4 voies (1), les canalisations (4, 5) allant du robinet à 4 voies (1) au flacon à échantillons (6) soient mises en circuit, tandis qu'après l'ouverture de la soupape (12) du blocage double allant vers le flacon à échantillons (6), on règle un remplissage prédéterminé de ce flacon à échantillons (6), de telle sorte que l'agent de rinçage bloqué entre les soupapes (12, 13) chasse une partie du liquide à éprouver dans le flacon à échantillons (6).

2. Dispositif selon la revendication 1, caractérisé en ce que l'axe longitudinal du flacon à échantillons (6) occupe une position s'écartant de l'horizontale, tandis que la canalisation (5) conduisant au flacon à échantillons (6), de même que la conduite d'alimentation (7) de l'agent de rinçage inerte occupent une position spatiale supérieure à celle de la canalisation (4) venant du flacon à échantillons et de la conduite d'évacuation (8) pour l'agent de rinçage inerte.

3. Dispositif selon la revendication 2, caractérisé en ce que l'axe longitudinal du flacon à échantillons (6) occupe une position verticale.

4. Dispositif selon les revendications 1 à 3, caractérisé en ce que la conduite d'alimentation ou la conduite d'évacuation réalisée sous forme d'une pièce en T ou en Y (14, 15) pour l'agent de rinçage inerte jusqu'au point de raccordement du flacon à échantillons est réalisée sous forme d'un tube double coaxial.

5. Dispositif selon la revendication 1, caractérisé en ce que le remplissage prédéterminé du flacon à échantillons (6) est de 60-95% du volume total du flacon à échantillons (6).

6. Dispositif selon les revendications 1 à 5, caractérisé en ce que le flacon à échantillons (6) peut être raccordé par vissage, tandis que le robinet à 4 voies (1) comporte un levier de manoeuvre amovible (19) qui est réalisé sous forme d'une clé à vis ayant une largeur nominale s'adaptant au raccord du flacon à échantillons.

7. Dispositif selon la revendication 6, caractérisé en ce que le levier de manoeuvre (19) du robinet à 4 voies (1), réalisé sous forme d'une clé à vis, ne peut être enlevé que lorsque le robinet à 4 voies (1) occupe une position (A) qui exclut un raccordement direct du récipient contenant le liquide à éprouver, avec le flacon à échantillons (6).

EP 0 224 692 B1

FIG. 1